(19) **Europäisches Patentamt / European Patent Office / Office européen des brevets**

(11) **EP 4 727 210 A1**

(12) # EUROPEAN PATENT APPLICATION
published in accordance with Art. 153(4) EPC

(43) Date of publication:
**15.04.2026 Bulletin 2026/16**

(21) Application number: **24822521.1**

(22) Date of filing: **24.05.2024**

(51) International Patent Classification (IPC):
**H04W 36/00** (2009.01)

(52) Cooperative Patent Classification (CPC):
**H04W 36/00; H04W 36/08; H04W 36/38**

(86) International application number:
**PCT/CN2024/095327**

(87) International publication number:
**WO 2024/255569 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.06.2023 CN 202310724404**

(71) Applicant: **Huawei Technologies Co., Ltd.
Shenzhen, Guangdong 518129 (CN)**

(72) Inventors:
• **ZHAO, Feiran
  Shenzhen, Guangdong 518129 (CN)**
• **CHEN, Ying
  Shenzhen, Guangdong 518129 (CN)**
• **WANG, Yu
  Shenzhen, Guangdong 518129 (CN)**
• **WANG, Xiaolu
  Shenzhen, Guangdong 518129 (CN)**
• **DU, Yinggang
  Shenzhen, Guangdong 518129 (CN)**

(74) Representative: **Thun, Clemens
  Mitscherlich PartmbB
  Karlstraße 7
  80333 München (DE)**

(54) **COMMUNICATION METHOD AND COMMUNICATION APPARATUS**

(57) This application provides a communication method and a communication apparatus. The technical solutions provided in this application include: obtaining first configuration information, where the first configuration information indicates a terminal device to perform a first handover, and the first handover is used to avoid a PCI collision; and obtaining second configuration information, where the second configuration information indicates the terminal device to cancel execution of the first handover. In the technical solutions provided in this application, cancelling execution of the first handover by the terminal device can reduce a quantity of handovers of the terminal device, thereby reducing complexity, signaling loss, and power consumption of the terminal device.

Obtain first configuration information, where the first configuration information indicates a terminal device to perform a first handover, and the first handover is used to avoid a PCI collision — S310

Obtain second configuration information, where the second configuration information indicates the terminal device to cancel execution of the first handover — S320

FIG. 3

EP 4 727 210 A1

## Description

This application claims priority to Chinese Patent Application No. 202310724404.4, filed with the China National Intellectual Property Administration on June 16, 2023 and entitled "COMMUNICATION METHOD AND COMMUNICATION APPARATUS", which is incorporated herein by reference in its entirety.

## TECHNICAL FIELD

This application relates to the field of wireless communication technologies, and in particular, to a communication method and a communication apparatus.

## BACKGROUND

In a non-terrestrial network (non-terrestrial network, NTN) technology, for example, in a low earth orbit (low earth orbit, LEO) NTN communication system, an elevation angle and an azimuth angle of a satellite beam may not change with movement of a satellite, so that a topology of projection of the satellite beam on the ground moves at a same speed as the movement of the satellite, and accordingly a topology of a satellite cell formed by the satellite beam on the ground also moves with a movement direction of the satellite. Such a cell may be referred to as an earth moving cell (earth moving cell).

When an LEO NTN provides a communication service for a terminal device through an earth moving cell, problems of high signaling overheads and high power consumption of a terminal occur.

## SUMMARY

This application provides a communication method and a communication apparatus, to reduce signaling overheads and power consumption of a terminal when a communication service is provided for a terminal device through an earth moving cell in a non-terrestrial network.

According to a first aspect, this application provides a communication method, including: obtaining first configuration information, where the first configuration information indicates a terminal device to perform a first handover, and the first handover is used to avoid a physical cell identifier PCI collision; and obtaining second configuration information, where the second configuration information indicates the terminal device to cancel execution of the first handover.

In an example, when isolation between two or more intra-frequency cells with a same physical cell identifier (physical cell identifier, PCI) is poor in geographical location, and the terminal device (user equipment, UE) cannot perform normal signal synchronization in a signal overlapping area of the two or more cells, it may be considered that the PCI collision occurs in these cells.

In an example, a mod-30 (mod-30) conflict occurs. To be specific, when PCI mod-30 values of two or more intra-frequency cells are the same, it may be considered that the PCI collision occurs in these cells.

In an example, two or more cells in which the PCI collision occurs respectively belong to different satellites.

In an example, avoidance of the PCI collision may be understood as making PCIs of cells in which the PCI collision occurs no longer collide.

Optionally, the first configuration information may be UE-level radio resource control reconfiguration (radio resource control reconfiguration, RRC-reconfiguration) signaling.

In an example, the first configuration information may be a new radio (new radio, NR) measurement and handover configuration, including a measurement object, a measurement report configuration, and the like.

In another example, the first configuration information may be a conditional handover (conditional handover, CHO) configuration, including a configuration of a CHO candidate cell, a CHO execution condition, and the like.

Optionally, when a first cell of a first satellite provides a communication service for the terminal device, a network device may predict that the PCI collision is about to occur between the first cell and a neighboring cell, and send the first configuration information to the terminal device, to avoid the PCI collision. Correspondingly, the terminal device may receive the first configuration information, and perform the first handover based on the first configuration information. Before performing the first handover, the terminal device may further determine, based on a decision condition, whether the terminal device needs to cancel execution of the first handover. If the terminal device cancels execution of the first handover, the second configuration information may indicate the terminal device to cancel execution of the first handover.

In this technical solution, cancelling execution of the first handover can reduce a quantity of handovers of the terminal device, thereby reducing complexity, signaling loss, and power consumption of the terminal device.

With reference to the first aspect, in some implementations of the first aspect, the terminal device is located at an edge of a first moving cell, the first moving cell is a serving cell of the terminal device, a PCI of the first moving cell is the same as a PCI of a second moving cell, and the second moving cell is a cell adjacent to the first moving cell in a movement direction of the terminal device.

In an example, the first moving cell may be a cell under the first satellite, and the second moving cell may be a cell under a second satellite.

Optionally, it may be considered that the terminal device is located at the edge of the first moving cell when the terminal device meets the following condition: A difference between a distance from a location of the terminal device to a center point of the first moving cell and a radius of the first moving cell is less than or equal to a distance threshold. The distance threshold may be set according to an actual requirement. This is not specifically limited herein.

Optionally, it may be further considered that the terminal device is located at the edge of the first moving cell when the terminal device meets the following condition: If synchronization signal block (synchronization signal/PBCH block, SSB) reference signal received power (reference signal received power, RSRP) of the first moving cell that is measured and reported by the terminal device is less than or equal to a threshold. The threshold may be set according to the actual requirement. This is not specifically limited herein.

This implementation provides the decision condition. When the decision condition is met, the terminal device may cancel execution of the first handover, so that signaling overheads and power consumption of the terminal device are reduced. The decision condition includes: The terminal device is located at the edge of the first moving cell, the terminal device is to move from the first moving cell to the second moving cell, and the first moving cell and the second moving cell have a same PCI.

With reference to the first aspect, in some implementations of the first aspect, the method further includes: obtaining third configuration information, where the third configuration information includes a measurement report configuration of a report cell global identity reportCGI type.

In this implementation, the terminal device may obtain the third configuration information from a network device side, where the third configuration information indicates the terminal device to perform a mobility handover. Correspondingly, the network device sends the third configuration information to the terminal device.

In some example scenarios, when a low earth orbit (low earth orbit, LEO) non-terrestrial network (non-terrestrial network, NTN) provides a communication service for the terminal device through an earth moving cell, the first cell that provides the communication service for the terminal device is always in a moving state, and a moving speed of the cell is usually greater than a moving speed of the terminal device. In this case, the terminal device at an edge of the first cell needs to perform the mobility handover. When the network device is ready to indicate the terminal device to perform the mobility handover from the first cell to a second cell, but the first cell and the second cell have a same PCI, and the terminal device cancels execution of the first handover, the network device cannot determine a target cell. In this case, the terminal device cannot normally perform the mobility handover. In this example, the target cell is the second cell.

In the foregoing scenario, the third configuration information may be the measurement report configuration that includes the report cell global identity (report cell global identifier, reportCGI) type. The terminal device may report CGIs of the first cell and the second cell based on the third configuration information, so that the network device can distinguish between first cell and the second cell, to indicate the terminal device to perform the mobility handover from the first cell to the second cell.

With reference to the first aspect, in some implementations of the first aspect, the method further includes: obtaining third configuration information, where the third configuration information indicates the terminal device to perform a mobility handover. The first configuration information includes a first moment for performing the first handover, the third configuration information includes a second moment for performing the mobility handover, and a time difference between the first moment and the second moment is less than or equal to a first time threshold; or the first configuration information includes a first time window for performing the first handover, the third configuration information includes a second time window for performing the mobility handover, and a time length of an overlapping area between the first time window and the second time window is less than or equal to a second time threshold, or a time difference between a start moment of the first time window and a start moment of the second time window is less than or equal to a third time threshold.

Optionally, the terminal device may obtain the third configuration information from a network device side, where the third configuration information indicates the terminal device to perform the mobility handover. Correspondingly, the network device sends the third configuration information to the terminal device.

Optionally, the third configuration information may be UE-level RRC-reconfiguration signaling.

In an example, the third configuration information may be an NR measurement and handover configuration, including a measurement object, a measurement report configuration, and the like.

In this example, after receiving the third configuration information, the terminal device may measure the measurement object based on the third configuration information, and report a measurement report to the network device. After receiving the measurement report, the network device determines whether there is a suitable target cell. If there is a suitable target cell, the network device indicates the terminal device to perform the mobility handover at a moment T1, so that the terminal device is handed over to the target cell at the moment T1.

It should be noted that, in this implementation, the first handover is predictable. Therefore, the first moment for performing the first handover may be determined based on a time at which the PCI collision occurs. In an example, the first moment may be a moment at which the PCI collision occurs, or may be a moment at which a fourth time threshold is met between the first moment and a moment at which the PCI collision occurs. This is not specifically limited herein.

In another example, the first configuration information and the third configuration information may be CHO configurations, including configurations of CHO candidate cells, CHO execution conditions, and the like. The CHO execution condition may be a time-based triggered CHO condition. For example, if the first configuration information is a time-triggered CHO configuration, and the CHO execution condition is that the terminal device performs a CHO handover to the target cell within a time window [t1, t2], the first time window is [t1, t2], and the start moment of the first time window is t1.

Optionally, the first time threshold, the second time threshold, the third time threshold, and the fourth time threshold may be set according to an actual requirement. This is not specifically limited herein.

This implementation provides the decision condition. When the decision condition is met, the terminal device may cancel execution of the first handover, so that signaling overheads and power consumption of the terminal device are reduced.

With reference to the first aspect, in some implementations of the first aspect, the second configuration information is carried in at least one of the following messages: radio resource control RRC signaling, media access control control element MAC CE signaling, downlink control information DCI, and a multicast message; or the second configuration information is carried in at least one of the following messages: a physical uplink shared channel PUSCH and a physical uplink control channel PUCCH.

In this implementation, if the method is implemented by the network device, the second configuration information may be carried in at least one of the following messages: the RRC signaling, the media access control control element (media access control control element, MAC CE) signaling, the downlink control information (downlink control information, DCI), and the multicast message, and is forwarded by the network device to the terminal device via downlink.

In this implementation, if the method is implemented by the terminal device, the second configuration information may be carried in at least one of the following messages: the physical uplink shared channel (physical uplink shared channel, PUSCH) and the physical uplink control channel (physical uplink control channel, PUCCH), and is transmitted by the terminal device to the network device via uplink.

With reference to the first aspect, in some implementations of the first aspect, a length of the second configuration information is 1 bit.

In an example, when a value of the second configuration information is "0", the terminal device is indicated to cancel execution of the first handover, or when a value of the second configuration information is "1", the terminal device is indicated to cancel execution of the first handover.

With reference to the first aspect, in some implementations of the first aspect, the method further includes: sending the first configuration information; and obtaining the second configuration information includes: receiving the second configuration information.

In this implementation, the method may be performed by the network device. The network device may send the first configuration information to the terminal device, to indicate the terminal device to perform the first handover when the PCI collision occurs. After receiving the first configuration information, the terminal device determines, based on the decision condition, whether to cancel execution of the first handover. If execution of the first handover is canceled, the terminal device sends the second configuration information to the network device, to indicate that the terminal device cancels execution of the first handover, and the terminal device cancels execution of the first handover at the same time. After receiving the second configuration information, the network device cancels a network resource that is reserved for the terminal device and that is used to perform the first handover, thereby saving resources.

With reference to the first aspect, in some implementations of the first aspect, the method further includes: sending the first configuration information; and sending the second configuration information.

In this implementation, the method may be performed by the network device. The network device may send the first configuration information to the terminal device, to indicate the terminal device to perform the first handover when the PCI collision occurs. After receiving the first configuration information, the terminal device performs the first handover at the first moment based on an indication of the first configuration information, or performs the first handover in the first time window. In addition, the network device further determines, based on the decision condition, whether the terminal device needs to cancel execution of the first handover. If execution of the first handover is canceled, the network device sends the second configuration information to the terminal device, to indicate the terminal device to cancel execution of the first handover, and the network device cancels a network resource that is reserved for the terminal device and that is used to perform the first handover. After receiving the second configuration information, the terminal device cancels execution of the first handover, so that the signaling overheads and the power consumption of the terminal device can be reduced.

With reference to the first aspect, in some implementations of the first aspect, obtaining the first configuration information includes: receiving the first configuration information; and the method further includes: sending the second configuration information.

In this implementation, the method may be performed by the terminal device. The terminal device may receive the first configuration information sent by the network device. The first configuration information indicates the terminal device to perform the first handover when the PCI collision occurs. After receiving the first configuration information, the terminal device determines, based on the decision condition, whether to cancel execution of the first handover. If execution of the first handover is canceled, the terminal device sends the second configuration information to the network device, to indicate that the terminal device cancels execution of the first handover, and the terminal device cancels execution of the first handover at the same time. After receiving the second configuration information, the network device cancels a network resource that is reserved for the terminal device and that is used to perform the first handover, thereby saving resources.

With reference to the first aspect, in some implementations of the first aspect, obtaining the first configuration information includes: receiving the first configuration information; and obtaining the second configuration information includes: receiving the second configuration information.

In this implementation, the method may be performed by the terminal device. The terminal device may receive the first configuration information sent by the network device. The first configuration information indicates the terminal device to perform the first handover when the PCI collision occurs. After receiving the first configuration information, the terminal device performs the first handover at the first moment based on an indication of the first configuration information, or performs the first handover in the first time window.

In addition, the terminal device may further receive the second configuration information sent by the network device. The second configuration information indicates the terminal device to cancel execution of the first handover. After receiving the second configuration information, the terminal device cancels execution of the first handover, so that the signaling overheads and the power consumption of the terminal device can be reduced.

Optionally, the method, the step, or the operation performed by the network device in the first aspect may also be performed by a chip system, a hardware circuit, and/or a software module that are/is used in the network device. This application is uniformly described by using the network device.

Optionally, the method, the step, or the operation performed by the terminal device in the first aspect may also be performed by a chip system, a hardware circuit, and/or a software module that are/is used in the terminal device. This application is uniformly described by using the terminal device.

According to a second aspect, this application provides a communication apparatus. The apparatus includes modules configured to implement the method in the first aspect or any one of the implementations of the first aspect, and each module may be implemented in a form of hardware and/or software.

For example, the apparatus may include an obtaining module. The obtaining module is configured to obtain first configuration information, where the first configuration information indicates a terminal device to perform a first handover, and the first handover is used to avoid a physical cell identifier PCI collision. The obtaining module is further configured to obtain second configuration information, where the second configuration information indicates the terminal device to cancel execution of the first handover.

With reference to the second aspect, in some implementations of the second aspect, the terminal device is located at an edge of a first moving cell, the first moving cell is a serving cell of the terminal device, a PCI of the first moving cell is the same as a PCI of a second moving cell, and the second moving cell is a cell adjacent to the first moving cell in a movement direction of the terminal device.

With reference to the second aspect, in some implementations of the second aspect, the obtaining module is further configured to obtain third configuration information, where the third configuration information includes a measurement report configuration of a report cell global identity reportCGI type.

With reference to the second aspect, in some implementations of the second aspect, the obtaining module is further configured to obtain third configuration information, where the third configuration information indicates the terminal device to perform a mobility handover. The first configuration information includes a first moment for performing the first handover, the third configuration information includes a second moment for performing the mobility handover, and a time difference between the first moment and the second moment is less than or equal to a first time threshold; or the first configuration information includes a first time window for performing the first handover, the third configuration information includes a second time window for performing the mobility handover, and a time length of an overlapping area between the first time window and the second time window is less than or equal to a second time threshold, or a time difference between a start moment of the first time window and a start moment of the second time window is less than or equal to a third time threshold.

With reference to the second aspect, in some implementations of the second aspect, the second configuration information is carried in at least one of the following messages: radio resource control RRC signaling, media access control control element MAC CE signaling, downlink control information DCI, and a multicast message; or the second configuration information is carried in at least one of the following messages: a physical uplink shared channel PUSCH and a physical uplink control channel PUCCH.

With reference to the second aspect, in some implementations of the second aspect, a length of the second configuration information is 1 bit.

With reference to the second aspect, in some implementations of the second aspect, the apparatus may further include a sending module. The sending module is configured to send the first configuration information. The obtaining module is specifically configured to receive the second configuration information.

With reference to the second aspect, in some implementations of the second aspect, the apparatus may further include a sending module. The sending module is further configured to send the first configuration information, and the sending module is further configured to send the second configuration information.

With reference to the second aspect, in some implementations of the second aspect, the obtaining module is specifically configured to receive the first configuration information. The apparatus further includes a sending module. The sending module is configured to send the second configuration information.

With reference to the second aspect, in some implementations of the second aspect, the obtaining module is specifically configured to receive the first configuration information. The obtaining module is further specifically configured to receive the second configuration information.

Optionally, the apparatus may further include a processing module. The processing module is configured to determine whether the terminal device cancels execution of the first handover. The processing module is further configured to determine a PCI collision cell. The processing module is further configured to perform a handover, for example, the first handover and the mobility handover.

According to a third aspect, this application provides a communication apparatus, including a processor. The processor may be coupled to a memory, and is configured to invoke program code in the memory, to perform the method according to the first aspect or any one of the possible implementations of the first aspect. Optionally, the apparatus further includes the memory. Optionally, the apparatus further includes a communication interface, and the processor is coupled to the communication interface.

Optionally, the apparatus may be a terminal device, or may be a chip system, a hardware circuit, and/or a software module that are/is used in the terminal device.

Optionally, the apparatus may be a network device, or may be a chip system, a hardware circuit, and/or a software module that are/is used in the network device.

According to a fourth aspect, this application provides a communication system, including a terminal device and a network device that are configured to perform the method according to the first aspect or any one of the possible implementations of the first aspect.

According to a fifth aspect, this application provides a computer program product including instructions. When the computer program product is run on a computer, the computer is enabled to perform the method according to the first aspect or any one of the possible implementations of the first aspect.

According to a sixth aspect, this application provides a computer-readable medium. The computer-readable medium stores program code to be executed by a device, and the program code includes the method according to the first aspect or any one of the possible implementations of the first aspect.

**BRIEF DESCRIPTION OF DRAWINGS**

FIG. 1 is a diagram of a single-satellite single-cell scenario in which a PCI collision occurs according to an embodiment of this application;

FIG. 2a is a diagram of an application scenario according to an embodiment of this application;

FIG. 2b is a diagram of an application scenario according to an embodiment of this application;

FIG. 2c is a diagram of an application scenario according to an embodiment of this application;

FIG. 3 is a diagram of a communication method according to an embodiment of this application;

FIG. 4 is a diagram of a communication method according to another embodiment of this application;

FIG. 5 is a diagram of a handover scenario according to an embodiment of this application;

FIG. 6 is a diagram of a communication method according to still another embodiment of this application;

FIG. 7 is a diagram of a structure of a communication apparatus according to an embodiment of this application; and

FIG. 8 is a diagram of a structure of a communication apparatus according to another embodiment of this application.

The foregoing accompanying drawings show specific embodiments of this application, and more detailed descriptions are provided below. The accompanying drawings and text descriptions are not intended to limit the scope of the idea of this application in any manner, but are intended to describe the concept of this application for a person skilled in the art with reference to particular embodiments.

**DESCRIPTION OF EMBODIMENTS**

Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with this application. On the contrary, the implementations are merely examples of apparatuses and methods that are described in the appended claims in detail and that are consistent with some aspects of this application.

A non-terrestrial network (non-terrestrial network, NTN) initiated by the 3rd generation partnership project (3rd generation partnership project, 3GPP) is dedicated to integrating satellite communication with a 5th generation (5th generation, 5G) mobile communication system, to implement a satellite-terrestrial integrated network that integrates a satellite network and a terrestrial network, and further implement three-dimensional network coverage in natural space such as space, sky, land, and ocean.

In an NTN technology, for example, in a low earth orbit (low earth orbit, LEO) NTN communication system, an elevation angle and an azimuth angle of a satellite beam may not change with movement of a satellite, so that a topology of projection of the satellite beam on the ground moves at a same speed as the movement of the satellite, and accordingly a topology of a satellite cell formed by the satellite beam on the ground also moves with a movement direction of the satellite. Such a cell may be referred to as an earth moving cell (earth moving cell).

For earth moving cells, each cell is assigned a physical cell identifier (physical cell identifier, PCI). The PCI may be obtained through calculation by using the following formula:

$$N_{ID}^{cell} = 3N_{ID}^{(1)} + N_{ID}^{(2)}$$

$N_{ID}^{cell}$ is a PCI of a cell. $N_{ID}^{(1)}$ is a first cell identifier, and may be obtained through calculation based on a pseudo-random sequence (for example, a gold sequence) used by a secondary synchronization signal (secondary synchronization signal, SSS) of a synchronization signal block (synchronization signal/PBCH block, SSB), and a value range is 0 to 335. $N_{ID}^{(2)}$ is a second cell identifier, and may be obtained through calculation based on a pseudo-random sequence (for example, an m-sequence) used by a primary synchronization signal (primary synchronization signal, PSS) of the SSB, and a value range is 0, 1, or 2. Therefore, a value range of the PCI is 0 to 1007.

The PCI of the earth moving cell may be bound to a satellite, and the satellite is responsible for managing and allocating a PCI of each cell under the satellite. For example, when there are a plurality of cells under a first satellite, the satellite allocates a PCI to each cell, so that PCIs of cells under the satellite are not duplicated.

Optionally, the PCI of the earth moving cell may be further bound to a ground station, and the ground station is responsible for managing and allocating a PCI of each cell under a satellite corresponding to the ground station. The PCI allocated by the ground station to each cell is also not duplicated.

However, a PCI collision may occur when there are a plurality of satellites in an NTN communication system.

In an example, when isolation between two or more intra-frequency cells with a same PCI is poor in geographical location, and a terminal device (user equipment, UE) cannot perform normal signal synchronization in a signal overlapping area of the two or more cells, it may be considered that the PCI collision occurs in these cells.

In an example, a mod-30 (mod-30) conflict occurs. To be specific, when PCI mod-30 values of two or more intra-frequency cells are the same, it may be considered that the PCI collision occurs in these cells.

It should be understood that two or more intra-frequency cells in which the PCI collision occurs belong to different satellites, and a scale of the PCI collision increases with an increase of a satellite scale and a quantity of cells under a satellite.

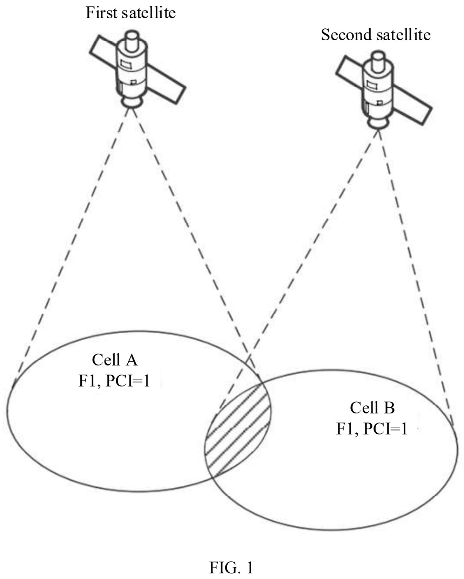

For example, FIG. 1 is a diagram of a single-satellite single-cell scenario in which a PCI collision occurs according to an embodiment of this application. As shown in FIG. 1, a cell A is a cell under a first satellite, and a cell B is a cell under a second satellite. If frequencies of both the cell A and the cell B are F1, PCIs of the cell A and the cell B are both 1, and network service areas of the cell A and the cell B overlap (for example, a shadow part in FIG. 1), it may be considered that a PCI collision occurs between the cell A and the cell B.

In the NTN communication system, to avoid the PCI collision, a network device may calculate topology information of cells under a satellite based on ephemeris information of a current satellite or other information, and change, based on a relative location relationship between satellites, a PCI of a cell that is about to encounter a PCI collision under the satellite. In a transparent transmission scenario of the satellite, the network device may be a base station deployed on the ground. In a regenerative scenario of the satellite, the network device may be a satellite. For example, if the network device detects that a PCI of a first cell of the first satellite is the same as a PCI of a second cell of the second satellite, a frequency of the first cell of the first satellite is the same as a frequency of the second cell of the second satellite, and a relative distance between the first cell and the second cell gradually decreases, the network device may change the PCI of the first cell, to avoid this time of a PCI collision.

That the network device changes the PCI of the cell that is about to encounter the PCI collision under the satellite includes: changing configurations of the cell that are related to the PCI, such as a sequence and a scrambling code, for example, changing an SSB beam configuration of the cell. After the network device changes the PCI of the cell, the terminal device in the cell needs to re-interpret a new SSB beam configuration, and access the cell with an updated PCI. In this embodiment, for ease of description, the cell in which the PCI collision occurs under the satellite is referred to as a PCI collision cell, and a handover procedure triggered by a terminal device in the PCI collision cell to avoid the PCI collision is referred to as a first handover.

However, when the terminal device performs the first handover, because the PCI collision cell is always in a moving process, and a moving speed of the cell is greater than a moving speed of the terminal device in the cell, the terminal device at an edge of the cell performs a mobility handover again. In this case, the terminal device at the edge of the PCI collision cell performs two consecutive handovers in a short time, resulting in high signaling overheads and high power consumption of a terminal.

In view of this, embodiments of this application provide a communication method and a communication apparatus. A decision condition is set to cancel execution of a first handover by a terminal device at an edge of a PCI collision cell, so that signaling overheads and power consumption of a terminal can be reduced.

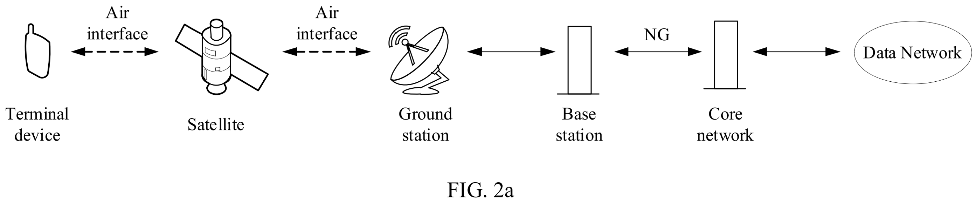

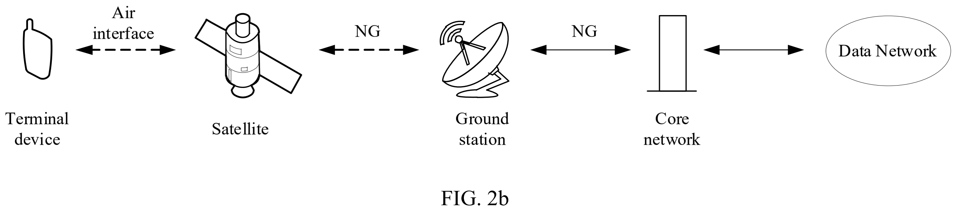

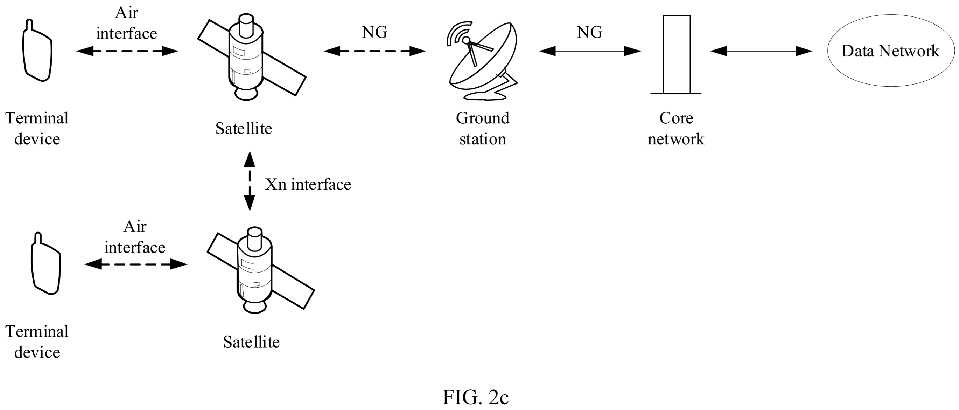

The following describes application scenarios in embodiments of this application by using examples with reference to FIG. 2a, FIG. 2b, and FIG. 2c.

FIG. 2a is a diagram of a satellite communication system in a transparent transmission scenario. As shown in FIG. 2a, a terminal device may access a network through an air interface (the air interface may be various types of air interfaces, for example, a 5G air interface). A network device (for example, a base station) may be deployed on the ground and connected to a ground station that communicates with a satellite. The satellite may be connected to the ground station through a wireless link. The ground station and the base station may be connected to a core network through a wired or wireless link. Satellites may communicate with each other through wireless links. In the system shown in FIG. 2a, the satellite has only a transparent transmission and forwarding function (that is, a corresponding network device is deployed on the ground), and only transparent transmission and forwarding are implemented between the satellites.

FIG. 2b and FIG. 2c are diagrams of a satellite communication system in a regenerative scenario. As shown in FIG. 2b, a terminal device may access a network through an air interface (the air interface may be various types of air interfaces, for example, a 5G air interface). A network device (for example, a base station) may be deployed on a satellite (for example, in a regenerative mode of the satellite). For example, a base station or some base station functions are deployed on the satellite, and signaling exchange and user data transmission between base stations may be completed between satellites, as shown in FIG. 2c.

For example, network elements in FIG. 2a to FIG. 2c and interfaces of the network elements are described as follows.

The terminal device includes a mobile device that supports new radio (new radio, NR), for example, a mobile device such as a mobile phone or a tablet. The terminal device may access a satellite network through the air interface and initiate services such as a call and internet access.

The base station is used to: provide a wireless access service, schedule a radio resource for the access terminal device, and provide a reliable wireless transmission protocol, a reliable data encryption protocol, and the like.

The ground station is responsible for forwarding signaling and service data between the satellite and the core network.

The core network is used for user access control, mobility management, session management, user security authentication, charging, or the like. The core network may include a plurality of functional units, for example, functional entities including a control plane and a data plane. For example, the core network shown in FIG. 2a to FIG. 2c may include an access and mobility management function (access and mobility management function, AMF), a session management function (session management function, SMF), a user plane function (user plane function, UPF), and the like. For example, the AMF may be responsible for user access management, security authentication, mobility management, and the like. The UPF may be responsible for managing user plane data transmission, traffic statistics collection, and the like.

The air interface shown in FIG. 2a to FIG. 2c may be understood as a radio link between a terminal and the base station, or a radio link between the satellite and the ground station. An Xn interface may be understood as an interface between base stations, and is mainly used for signaling exchanges such as a handover. An NG interface may be used as an interface between the base station and the core network, and is used for signaling exchanges such as non-access stratum (non-access stratum, NAS) signaling of the core network and service data of a user.

Optionally, the technical solutions provided in embodiments of this application may be applied to a 5G mobile communication system, or may be applied to a 4th generation (4th generation, 4G) mobile communication system. This is not specifically limited herein. If embodiments of this application are applied to the 4G mobile communication system, the Xn interface shown in FIG. 2a to FIG. 2c is an X2 interface, and the NG interface is an S1 interface.

Optionally, the technical solutions provided in embodiments of this application are not limited to an LEO NTN communication system, and may be further applied to an NTN communication system in another orbital altitude, for example, a medium earth orbit (medium earth orbit, MEO) NTN communication system, or a high earth orbit (high earth orbit, HEO) NTN communication system.

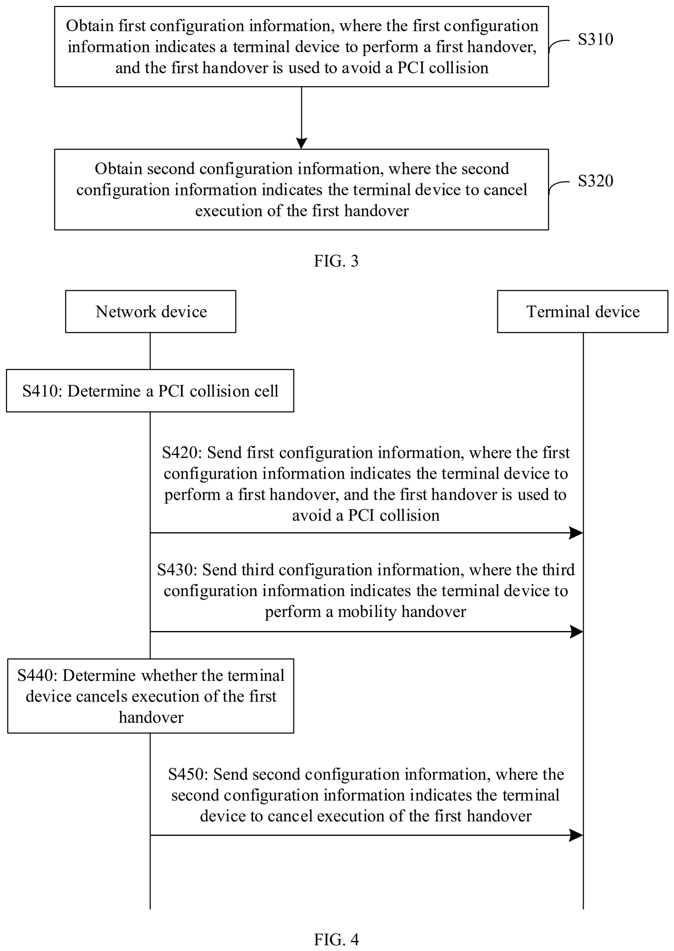

FIG. 3 is a diagram of a communication method according to an embodiment of this application. As shown in FIG. 3, the method may include S310 and S320.

In some implementations, the method in this embodiment may be performed by a terminal device, or may be performed by a chip system, a hardware circuit, and/or a software module that are/is used in the terminal device. The terminal device in subsequent content of this embodiment may optionally be replaced with the chip system, the hardware circuit, and/or the software module in the terminal device.

In some implementations, the method in this embodiment may be performed by a network device, or may be performed by a chip system, a hardware circuit, and/or a software module that are/is used in the network device. The network device in subsequent content of this embodiment may optionally be replaced with the chip system, the hardware circuit, and/or the software module in the network device.

In a transparent transmission scenario of a satellite, the network device may be a base station deployed on the ground. In a regenerative scenario of a satellite, the network device may be a satellite.

S310: Obtain first configuration information, where the first configuration information indicates a terminal device to perform a first handover, and the first handover is used to avoid a PCI collision.

In an example, when predicting that a PCI collision is about to occur between a first cell of a first satellite and a second cell adjacent to the first cell, the network device delivers a first configuration message to all terminal devices in the first cell, to indicate the terminal devices in the cell to perform a handover procedure triggered to avoid the PCI collision, that is, the first handover.

Optionally, the first configuration information includes information related to a new PCI value (PCI value), for example, includes a PCI, a PSS/SSS sequence, a physical uplink shared channel (physical uplink shared channel, PUSCH) demodulation reference signal (demodulation reference signal, DMRS) sequence, a physical uplink control channel (physical uplink control channel, PUCCH) DMRS sequence, a sounding reference signal (sounding reference signal, SRS) sequence, or a physical broadcast channel (physical broadcast channel, PBCH) DMRS sequence. The first configuration information may further include an effective time Tw of the first configuration information, and the effective time may be understood as a time at which the terminal device performs the first handover.

In a possible implementation, the first configuration information may be a cell-level broadcast message. In an example, before the PCI collision occurs, the network device may configure two different cell reselection configurations in a system message for a terminal device in a non-connected state, including a cell reselection configuration before a PCI of the first cell change and a cell reselection configuration after the PCI of the first cell change. The cell reselection configuration includes information included in the first configuration information, such as a PCI value of a cell.

Optionally, the first configuration information may be delivered through a system information block (system information block, SIB), for example, delivered through broadcasting SIB2 to SIB4.

In a possible implementation, the first configuration information may be UE-level radio resource control reconfiguration (radio resource control reconfiguration, RRC-reconfiguration) signaling. In an example, when the PCI collision occurs, the network device may configure, through the RRC-reconfiguration signaling, a configuration of a target cell for all terminal devices in a connected state (RRC-connected) in the first cell. The target cell is a first cell whose PCI is updated.

Optionally, the configuration of the target cell may be an NR measurement and handover configuration, including a measurement object, a measurement report configuration, and the like. The measurement object may include a plurality of target cells. The measurement report configuration may include a measurement report configuration of an event-triggered (event-Triggered) type, a measurement report configuration of a periodic (periodic) type, or a measurement report configuration of a report cell global identity (report cell global identifier, reportCGI) type.

Optionally, the configuration of the target cell may be a conditional handover (conditional handover, CHO) configuration, including a configuration of a CHO candidate cell, a CHO execution condition, and the like. The CHO execution condition includes a time-based triggered CHO condition or a location-based triggered CHO condition.

In a possible implementation, the first configuration information may be delivered in a multicast form or in a form of a combination of broadcast and unicast. In an example, the network device may indicate a part of configurations of the first handover to each terminal device in the first cell through a broadcast message, for example, a measurement frequency, a measurement object, and an SSB measurement timing configuration (SSB measurement timing configuration, SMTC), and deliver a remaining configuration of the first handover to each terminal device through RRC signaling.

In this embodiment, after receiving the first configuration information, the terminal device may perform the first handover when the effective time Tw indicated by the first configuration information arrives, so that the PCI collision can be avoided.

Optionally, if the method is performed by the terminal device, the terminal device may receive the first configuration information from the network device. Correspondingly, the network device may send the first configuration information to the terminal device.

Optionally, if the method is performed by the network device, after obtaining the first configuration information, the network device may send the first configuration information to the terminal device. Correspondingly, the terminal device receives the first configuration information.

S320: Obtain second configuration information, where the second configuration information indicates the terminal device to cancel execution of the first handover.

In this embodiment, before performing the first handover, the terminal device may determine, based on a decision condition, whether the terminal device cancels execution of the first handover. If execution of the first handover is canceled, the second configuration information indicates the terminal device to cancel execution of the first handover.

Optionally, the decision condition may be preconfigured in the terminal device or the network device, to facilitate invoking and improve efficiency.

In a possible implementation, execution of the first handover may be canceled when the following decision condition is met: A time difference between a first moment for performing the first handover and a second moment for performing a mobility handover is less than or equal to a first time threshold.

In this implementation, the first moment may be the effective time Tw in the first configuration information. The second moment is a time T1 that is in third configuration information and that indicates the terminal device to perform the mobility handover, and the third configuration information indicates the terminal device to perform the mobility handover.

The PCI collision is predictable. Therefore, Tw may be determined based on a time at which the PCI collision occurs. In an example, Tw may be a moment at which the PCI collision occurs, or may be a moment at which a fourth time threshold is met between Tw and a moment at which the PCI collision occurs. This is not specifically limited in this application.

Optionally, the third configuration information may be an NR measurement and handover configuration, including a measurement object, a measurement report configuration, and the like.

Optionally, the terminal device may obtain the third configuration information from the network device. After receiving the third configuration information, the terminal device may measure the measurement object based on the third configuration information, and report a measurement report to the network device. After receiving the measurement report, the network device determines whether there is a suitable target cell. If there is a suitable target cell, the network device indicates the terminal device to perform the mobility handover at the moment T1, so that the terminal device is handed over to the target cell at the moment T1.

In a possible implementation, execution of the first handover may also be canceled when the following decision condition is met: A time length of an overlapping area between a first time window for performing the first handover and a second time window for performing the mobility handover is less than or equal to a second time threshold, or a time difference between a start moment of the first time window and a start moment of the second time window is less than or equal to a third time threshold.

In this implementation, both the first configuration information and the third configuration information may be CHO configurations, and the CHO execution condition in the CHO configuration may be the time-based triggered CHO condition.

In this implementation, the first time window may be a time period in which the first configuration information indicates the terminal device to perform the first handover, and the second time window may be a time period in which the third configuration information indicates the terminal device to perform the mobility handover.

In this embodiment, the first time threshold, the second time threshold, the third time threshold, and the fourth time threshold may be set according to an actual requirement. This is not specifically limited in this application.

In this embodiment, optionally, if the method is performed by the network device, the network device may send the second configuration information to the terminal device. Correspondingly, the terminal device receives the second configuration information from the network device, and cancels execution of the first handover.

Optionally, the second configuration information may be carried in at least one of the following messages: RRC signaling, media access control control element (media access control control element, MAC CE) signaling, downlink control information (downlink control information, DCI), and a multicast message.

Optionally, the network device may deliver the second configuration information to only a terminal device that does not meet the decision condition.

In this embodiment, if the method is performed by the network device, execution of the first handover may be canceled when the following decision condition is met: The terminal device is located at an edge of a first moving cell, the first moving cell is a serving cell of the terminal device, a PCI of the first moving cell is the same as a PCI of a second moving cell, and the second moving cell is a cell adjacent to the first moving cell in a movement direction of the terminal device.

The first moving cell may be a cell under the first satellite, and the second moving cell may be a cell under a second satellite.

Optionally, it may be considered that the terminal device is located at the edge of the first moving cell when the terminal device meets the following condition: A difference between a distance from a location of the terminal device to a center point of the first moving cell and a radius of the first moving cell is less than or equal to a distance threshold. The distance threshold may be set according to the actual requirement. This is not specifically limited in this application.

Optionally, it may be further considered that the terminal device is located at the edge of the first moving cell when the terminal device meets the following condition: If SSB reference signal received power (reference signal received power, RSRP) of the first moving cell that is measured and reported by the terminal device is less than or equal to a threshold. The threshold may be set according to the actual requirement. This is not specifically limited in this application.

Optionally, the network device may determine, based on global navigation satellite system (global navigation satellite system, GNSS) location information of the terminal device, ephemeris information, and cell topology information, whether the terminal device is located at the edge of the first moving cell, and determine a movement trajectory of the terminal device.

Optionally, if the method is performed by the terminal device, the terminal device may send the second configuration information to the network device. Correspondingly, the network device receives the second configuration information from the terminal device, and cancels a network resource that is reserved by the network device for the terminal device and that is used to perform the first handover.

Optionally, the second configuration information may be carried in at least one of the following messages: a PUSCH and a PUCCH.

Optionally, a length of the second configuration information may be 1 bit (bit). For example, when a value of the second configuration information is "0", the terminal device is indicated to cancel execution of the first handover, or when a value of the second configuration information is "1", the terminal device is indicated to cancel execution of the first handover.

In this embodiment, cancelling execution of the first handover can reduce a quantity of handovers of the terminal device, thereby reducing complexity, signaling loss, and power consumption of the terminal device.

FIG. 4 is a diagram of a communication method according to another embodiment of this application. As shown in FIG. 4, the method may include S410 to S450.

In this embodiment, the method may be performed by a network device, or may be performed by a chip system, a hardware circuit, and/or a software module that are/is used in the network device. This application is uniformly described by using the network device.

In a transparent transmission scenario of a satellite, the network device may be a base station deployed on the ground. In a regenerative scenario of a satellite, the network device may be a satellite.

S410: Determine a PCI collision cell.

In an example, the network device may determine, based on a satellite and cell topology information, a first cell that is under the satellite and that has a PCI collision with a neighboring satellite cell. The cell topology information may include a relative motion, a location relationship, and the like of cell topology. The neighboring satellite cell may be understood as a cell adjacent to the first cell under another satellite.

It should be noted that a specific implementation method for determining the PCI collision cell is not limited in this embodiment.

S420: Send first configuration information, where the first configuration information indicates a terminal device to perform a first handover, and the first handover is used to avoid a PCI collision.

In this embodiment, when predicting that a PCI collision is about to occur between the first cell of a first satellite and a second cell adjacent to the first cell, the network device delivers a first configuration message to all terminal devices in the first cell, to indicate the terminal devices in the cell to perform a handover procedure triggered to avoid the PCI collision, that is, the first handover. Correspondingly, the terminal device receives the first configuration information. For a specific implementation of S420, refer to the detailed description in S310. Details are not described herein again.

In an example, the first configuration information may be a CHO configuration, and the CHO configuration is a time-based triggered CHO execution condition. For example, an execution condition is condEventT1, and condEventTI includes a time window [t1, t2] in which the first handover is performed.

After the network device sends the first configuration information to the terminal device, the network device reserves, for the terminal device, a network resource used to perform the first handover in the time window [t1, t2]. After receiving the first configuration information, the terminal device performs the first handover in the time window [t1, t2] indicated by the first configuration information, to hand over to the first cell with an updated PCI.

S430: Send third configuration information, where the third configuration information indicates the terminal device to perform a mobility handover.

In this embodiment, the network device may determine, based on RSRP that is of a cell and that is reported by the terminal device and that provides a network service for the terminal device, whether the terminal device needs to perform the mobility handover. If the RSRP of the cell is less than or equal to a threshold, the network device sends the third configuration information to a terminal device in a connected state in the cell, to indicate the terminal device to perform the mobility handover. Correspondingly, the terminal device receives the third configuration information. The threshold may be set according to an actual requirement. This is not specifically limited herein.

Optionally, the third configuration information may be UE-level RRC-reconfiguration signaling.

In an example, the third configuration information may be an NR measurement and handover configuration, including a measurement object, a measurement report configuration, and the like.

In this example, optionally, a specific configuration of a measurement report in the third configuration information may be set based on a target cell to which the network device is ready to indicate the terminal device to hand over.

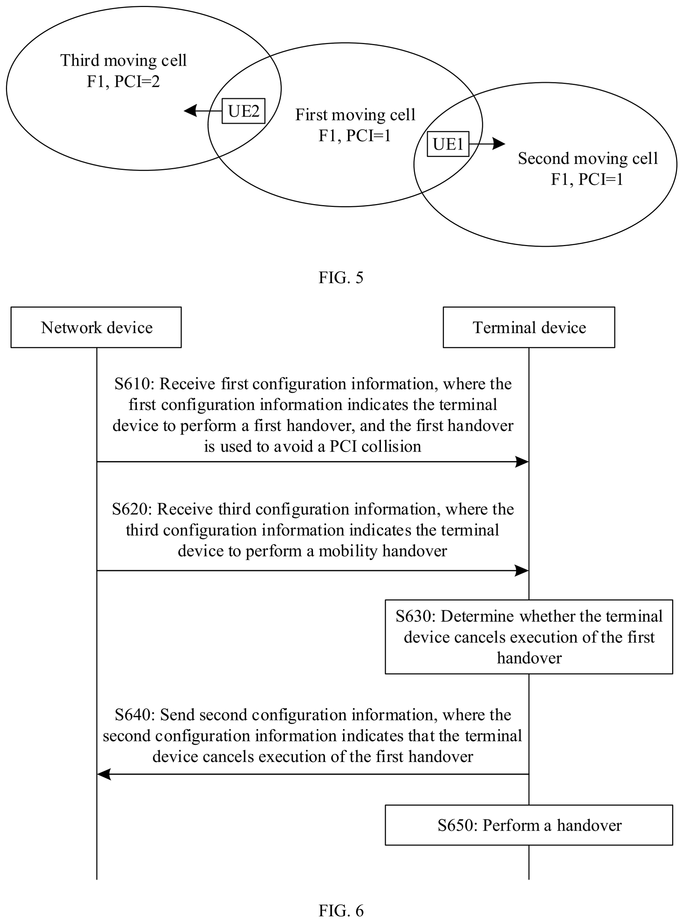

For example, FIG. 5 is a diagram of a handover scenario according to an embodiment of this application. As shown in FIG. 5, if the network device is ready to indicate the terminal device (for example, UE1) to perform the mobility handover from a first moving cell to a second moving cell, when the second moving cell and the first moving cell have a same frequency and a same PCI, the third configuration information may include a measurement report configuration of a reportCGI-type. The first moving cell is a serving cell of the terminal device, and the second moving cell is a cell adjacent to the first moving cell in a movement direction of the terminal device. It should be understood that, when the first moving cell and the second moving cell have the same frequency and the same PCI, the first moving cell and the second moving cell are cells under different satellites.

After receiving the third configuration information, the terminal device may report CGIs of the first moving cell and the second moving cell to the network device, so that the network device can distinguish between the first moving cell and the second moving cell, to indicate the terminal device to hand over to the second moving cell based on the CGIs.

Optionally, after receiving the third configuration information, the terminal device may further report RSRP of the first moving cell and RSRP of the second moving cell to the network device.

As shown in FIG. 5, if the network device is ready to indicate the terminal device (for example, UE2) to perform the mobility handover from the first moving cell to a third moving cell, when a PCI of the third moving cell is different from a PCI of the first moving cell, the third configuration information may include a measurement report configuration of an event-triggered type or a measurement report configuration of a periodic type. The first moving cell is the serving cell of the terminal device, and the third moving cell is a cell adjacent to the first moving cell in the movement direction of the terminal device.

Optionally, when a PCI of the first moving cell is different from that of the third moving cell, the first moving cell and the second moving cell may be cells under a same satellite, or may be the cells under the different satellites. This is not specifically limited herein.

After receiving the third configuration information, the terminal device reports PCIs and the RSRP of the first moving cell and the second moving cell to the network device, and the network device indicates the terminal device to hand over to the second moving cell based on the PCIs reported by the terminal device.

In an example, the third configuration information may be the CHO configuration, including a configuration of a CHO candidate cell, a CHO execution condition, and the like.

For example, if the third configuration information may be a time-based triggered CHO configuration, and the CHO configuration is a time-based triggered

CHO execution condition condEventTI, condEventT1 includes a time window [t3, t4] in which the terminal device performs the mobility handover.

In this example, after the network device sends the third configuration information to the terminal device, the network device reserves, for the terminal device, a network resource used to perform the mobility handover in the time window [t3, t4]. After receiving the third configuration information, the terminal device performs the mobility handover in the time window [t3, t4] indicated by the third configuration information, to hand over to the target cell indicated by the network device.

In this embodiment, S420 and S430 are not performed in sequence. S420 may be performed before S430, or S430 may be performed before S420.

S440: Determine whether the terminal device cancels execution of the first handover.

In this embodiment, the network device may determine, based on a decision condition, whether the terminal device cancels execution of the first handover. For a specific implementation of S430, refer to related detailed content in S320. Details are not described herein again.

In an example, both the first configuration information and the third configuration information may be time-based triggered CHO configurations. The first configuration information includes the time window [t1, t2] that is configured for the terminal device to perform the first handover, and the third configuration information includes the time window [t3, t4] that is configured for the terminal device to perform the mobility handover.

Optionally, the network device may determine whether a time length of an overlapping area between a first time window and a second time window is less than or equal to a second time threshold. If the time length of the overlapping area is less than or equal to the second time threshold, the terminal device cancels execution of the first handover; or if the time length of the overlapping area is greater than the second time threshold, the terminal device performs the first handover in the first time window.

Optionally, the network device may further determine whether a time difference between a start moment of the first time window and a start moment of the second time window is less than or equal to a third time threshold. If the time difference between the start moment of the first time window and the start moment of the second time window is less than or equal to the third time threshold, the terminal device cancels execution of the first handover; or if the time difference between the start moment of the first time window and the start moment of the second time window is greater than the third time threshold, the terminal device performs the first handover in the first time window.

S450: Send second configuration information, where the second configuration information indicates the terminal device to cancel execution of the first handover.

In this embodiment, after the network device determines, based on the decision condition, that the terminal device cancels execution of the first handover, the network device may send the second configuration information to the terminal device, to indicate the terminal device to cancel execution of the first handover, and the network device releases the network resource that is reserved for the terminal device and that is used to perform the first handover at the same time, thereby saving resources. Correspondingly, the terminal device receives the second configuration information, and after receiving the second configuration information, the terminal device cancels execution of the first handover, and performs only the mobility handover, so that a quantity of handovers of the terminal device can be reduced, and signaling overheads and power consumption of the terminal device are reduced.

FIG. 6 is a diagram of a communication method according to still another embodiment of this application. As shown in FIG. 6, the method may include S610 to S650.

In this embodiment, the method may be performed by a terminal device, or may be performed by a chip system, a hardware circuit, and/or a software module that are/is used in the terminal device. This application is uniformly described by using the terminal device.

S610: Receive first configuration information, where the first configuration information indicates the terminal device to perform a first handover, and the first handover is used to avoid a PCI collision.

In this embodiment, the terminal device may receive the first configuration information sent by a network device.

For specific content of the first configuration information in S610, refer to related detailed descriptions in S310 or S420. Details are not described herein again.

S620: Receive third configuration information, where the third configuration information indicates the terminal device to perform a mobility handover.

In this embodiment, the terminal device may receive the third configuration information sent by the network device.

For specific content of the third configuration information in S620, refer to related detailed descriptions in S430. Details are not described herein again.

In this embodiment, S610 and S620 are not performed in sequence. S610 may be performed before S620, or S620 may be performed before S610.

S630: Determine whether the terminal device cancels execution of the first handover.

In this embodiment, the terminal device may determine, based on a decision condition, whether the terminal device cancels execution of the first handover.

For a specific implementation in which the terminal device determines, based on the decision condition, whether to cancel execution of the first handover, refer to related detailed content in S320 or S440. Details are not described herein again.

S640: Send second configuration information, where the second configuration information indicates that the terminal device cancels execution of the first handover.

In this embodiment, after the terminal device determines, based on the decision condition, to cancel execution of the first handover, the terminal device may send the second configuration information to the network device, to indicate that the terminal device cancels execution of the first handover, and the terminal device cancels execution of the first handover, thereby reducing signaling overheads and power consumption of the terminal device. Correspondingly, the network device receives the second configuration information, and after receiving the second configuration information, the network device releases a network resource that is reserved for the terminal device and that is used to perform the first handover, thereby saving resources and improving resource utilization.

S650: Perform a handover.

In this embodiment, if execution of the first handover is canceled, the terminal device needs to perform only the mobility handover; or if execution of the first handover is not canceled, the terminal device performs the first handover and the mobility handover.

In a possible implementation, the terminal device determines, based on the decision condition, to cancel execution of the first handover, and sends the second configuration information to the network device. After receiving the second configuration information, the network device may re-determine, based on factors such as network system load, whether the terminal device can cancel execution of the first handover.

In this implementation, if the network device determines that the terminal device can cancel execution of the first handover, the network device may send fourth configuration information to the terminal device, to indicate the terminal device to cancel execution of the first handover. Correspondingly, the terminal device receives the fourth configuration information, and cancels execution of the first handover.

In this implementation, if the network device determines that the terminal device cannot cancel execution of the first handover, the network device may send the fourth configuration information to the terminal device, to indicate the terminal device to forcibly perform the first handover. Correspondingly, the terminal device receives the fourth configuration information, and performs the first handover based on the first configuration information.

Optionally, a length of the fourth configuration information may be 1 bit. For example, when a value of the fourth configuration information is "0", the terminal device is indicated to cancel execution of the first handover; or when a value of the fourth configuration information is "1", the terminal device is indicated to perform the first handover. For example, when a value of the fourth configuration information is "1", the terminal device is indicated to cancel execution of the first handover; or when a value of the fourth configuration information is "0", the terminal device is indicated to perform the first handover.

Optionally, the fourth configuration information may be carried in at least one of the following messages: RRC signaling, MAC CE signaling, a DCI field indication, and a multicast message.

Optionally, the fourth configuration information may be carried in the first configuration information. In an example, when the first configuration information is delivered through an SIB, the fourth configuration information may be used as a newly introduced field in the first configuration information, and is separately configured in an SIB message. For example, a manner of configuring the fourth configuration information in the SIB may be two value states: "enabled" and "disabled". In the "enabled" state, the terminal device needs to perform the first handover, and in the "disabled" state, the terminal device may cancel execution of the first handover.

Optionally, when the first configuration information is a CHO configuration, the fourth configuration information may be carried in a CHO execution condition, to implicitly indicate the terminal device to perform the first handover. For example, when the CHO execution condition is a time-based triggered CHO condition, and a length of a time window for performing the first handover is greater than or equal to a fifth time threshold, the terminal device performs the first handover. The fifth time threshold may be set based on an actual situation. This is not specifically limited in this application.

In a possible implementation, both the network device and the terminal device may determine, based on the decision condition, whether the terminal device cancels execution of the first handover.

In this implementation, if the network device determines that the terminal device needs to perform the first handover based on the factors such as the network system load, the network device may send the fourth configuration information to the terminal device, to indicate the terminal device to forcibly perform the first handover. Correspondingly, after receiving the fourth configuration information, the terminal device performs the first handover, and stops performing S630 and S640.

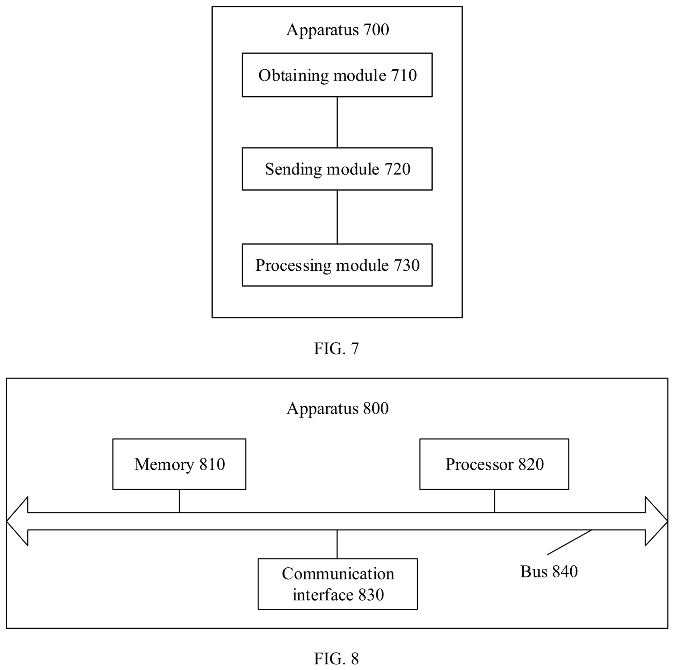

FIG. 7 is a diagram of a structure of a communication apparatus according to an embodiment of this application. The apparatus 700 shown in FIG. 7 may be configured to implement steps performed by a terminal device or a network device in FIG. 3, FIG. 4, or FIG. 6. As shown in FIG. 7, the apparatus 700 in this embodiment may include an obtaining module 710, a sending module 720, and a processing module 730.

When the apparatus 700 is configured to implement the method shown in FIG. 3, the obtaining module 710 may be configured to implement S310 and S320.

When the apparatus 700 is configured to implement the method shown in FIG. 4, the obtaining module 710 may be configured to implement operations performed by the terminal device in S420, S430, and S450, the sending module 720 may be configured to implement operations performed by the network device in S420, S430, and S450, and the processing module 730 may be configured to implement S410 and S440.

When the apparatus 700 is configured to implement the method shown in FIG. 6, the obtaining module 710 may be configured to implement operations performed by the terminal device in S610 and S620, the obtaining module 710 is further configured to implement an operation performed by the network device in S640, the sending module 720 may be configured to implement operations performed by the network device in S610 and S620, the sending module 720 may be further configured to implement an operation performed by the terminal device in S640, and the processing module 730 may be configured to implement S630 and S650.

FIG. 8 is a diagram of a structure of a communication apparatus according to another embodiment of this application. The apparatus shown in FIG. 8 may be configured to implement the method performed by a terminal device or a network device in any one of the foregoing embodiments.

As shown in FIG. 8, the apparatus 800 in this embodiment includes a memory 810, a processor 820, a communication interface 830, and a bus 840. The memory 810, the processor 820, and the communication interface 830 implement mutual communication connections through the bus 840.

The memory 810 may be a read-only memory (read-only memory, ROM), a static storage device, a dynamic storage device, or a random access memory (random access memory, RAM). The memory 810 may store a program. When the program stored in the memory 810 is executed by the processor 820, the processor 820 is configured to perform steps performed by the terminal device or the network device in the method shown in FIG. 3, FIG. 4, or FIG. 6.

The processor 820 may be a general-purpose central processing unit (central processing unit, CPU), a microprocessor, an application-specific integrated circuit (application-specific integrated circuit, ASIC), or one or more integrated circuits, and is configured to execute a related program, to implement the method in the method embodiment of this application.

The processor 820 may alternatively be an integrated circuit chip and has a signal processing capability. In an implementation process, the steps in embodiments of this application may be completed by using a hardware integrated logic circuit in the processor 820 or an instruction in a form of software.

The processor 820 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. It may implement or perform the methods, the steps, and logic block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 810. The processor 820 reads information in the memory 810, and completes, in combination with hardware of the processor 820, functions that need to be performed by modules included in the communication apparatus in this application. For example, the processor 820 may perform the steps/the functions performed by the terminal device or the network device in the method shown in FIG. 3, FIG. 4, or FIG. 6.

Optionally, the memory 810 and the processor 820 may be integrated together.

The communication interface 830 may use, but is not limited to, a transceiver apparatus like a transceiver, to implement communication between the apparatus 800 and another device or a communication network.

The bus 840 may include a path for transmitting information between the components (for example, the memory 810, the processor 820, and the communication interface 830) of the apparatus 800.

It should be noted that the modules or components shown in the foregoing embodiments may be configured as one or more integrated circuits for implementing the foregoing methods, for example, one or more application-specific integrated circuits (application-specific integrated circuit, ASIC), one or more microprocessors (digital signal processor, DSP), or one or more field programmable gate arrays (field programmable gate array, FPGA). For another example, when one of the foregoing modules is implemented in a form in which a processing element schedules program code, the processing element may be a general-purpose processor, for example, a central processing unit (central processing unit, CPU) or another processor that can invoke the program code, for example, a controller. For another example, the modules may be integrated together and implemented in a form of a system-on-a-chip (system-on-a-chip, SoC).

All or some of the foregoing embodiments may be implemented by software, hardware, firmware, software modules or any combination thereof. When the software is used to implement the embodiments, all or a part of the embodiments may be implemented in a form of a computer program product. The computer program product includes one or more computer instructions.

When computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The term "a plurality of" in this specification means two or more. The term "and/or" in this specification describes only an association relationship between associated objects and indicates that three relationships may exist. For example, A and/or B may indicate the following three cases: Only A exists, both A and B exist, and only B exists. In addition, a character "/" in this specification usually indicates an "or" relationship between the associated objects. In a formula, the character "/" indicates a "division" relationship between the associated objects. In addition, it should be understood that, in description of this application, terms such as "first" and "second" are merely used for distinguishing and description, but should not be understood as indicating or implying relative importance, or should not be understood as indicating or implying a sequence.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined based on functions and internal logic of the processes, and should not be construed as any limitation on implementation processes in embodiments of this application.

**Claims**

1. A communication method, wherein the method comprises:

> obtaining first configuration information, wherein the first configuration information indicates a terminal device to perform a first handover, and the first handover is used to avoid a physical cell identifier PCI collision; and

obtaining second configuration information, wherein the second configuration information indicates the terminal device to cancel execution of the first handover.

2. The method according to claim 1, wherein the terminal device is located at an edge of a first moving cell, the first moving cell is a serving cell of the terminal device, a PCI of the first moving cell is the same as a PCI of a second moving cell, and the second moving cell is a cell adjacent to the first moving cell in a movement direction of the terminal device.

3. The method according to claim 1 or 2, wherein the method further comprises:
obtaining third configuration information, wherein the third configuration information comprises a measurement report configuration of a report cell global identity reportCGI type.

4. The method according to claim 1, wherein the method further comprises:

obtaining third configuration information, wherein the third configuration information indicates the terminal device to perform a mobility handover; and
the first configuration information comprises a first moment for performing the first handover, the third configuration information comprises a second moment for performing the mobility handover, and a time difference between the first moment and the second moment is less than or equal to a first time threshold; or
the first configuration information comprises a first time window for performing the first handover, the third configuration information comprises a second time window for performing the mobility handover, and a time length of an overlapping area between the first time window and the second time window is less than or equal to a second time threshold, or a time difference between a start moment of the first time window and a start moment of the second time window is less than or equal to a third time threshold.

5. The method according to any one of claims 1 to 4, wherein the second configuration information is carried in at least one of the following messages: radio resource control RRC signaling, media access control control element MAC CE signaling, downlink control information DCI, and a multicast message; or the second configuration information is carried in at least one of the following messages: a physical uplink shared channel PUSCH and a physical uplink control channel PUCCH.

6. The method according to any one of claims 1 to 5, wherein a length of the second configuration information is 1 bit.

7. The method according to any one of claims 1 to 6, wherein the method further comprises: sending the first configuration information, wherein obtaining the second configuration information comprises: receiving the second configuration information.

8. The method according to any one of claims 1 to 6, wherein the method further comprises:

sending the first configuration information; and
sending the second configuration information.

9. The method according to any one of claims 1 to 6, wherein obtaining the first configuration information comprises: receiving the first configuration information; and
the method further comprises: sending the second configuration information.

10. The method according to any one of claims 1 to 6, wherein obtaining the first configuration information comprises: receiving the first configuration information; and
obtaining the second configuration information comprises: receiving the second configuration information.

11. A communication apparatus, comprising:

an obtaining module, configured to obtain first configuration information, wherein the first configuration information indicates a terminal device to perform a first handover, and the first handover is used to avoid a physical cell identifier PCI collision; and
the obtaining module is further configured to obtain second configuration information, wherein the second configuration information indicates the terminal device to cancel execution of the first handover.

12. The apparatus according to claim 11, wherein the terminal device is located at an edge of a first moving cell, the first moving cell is a serving cell of the terminal device, a PCI of the first moving cell is the same as a PCI of a second moving cell, and the second moving cell is a cell adjacent to the first moving cell in a movement direction of the terminal device.

13. The apparatus according to claim 11 or 12, wherein the obtaining module is further configured to:
obtain third configuration information, wherein the third configuration information comprises a measurement report configuration of a report cell global identity reportCGI type.

14. The apparatus according to claim 11, wherein the obtaining module is further configured to:

obtain third configuration information, wherein the third configuration information indicates the terminal device to perform a mobility handover; and
the first configuration information comprises a first moment for performing the first handover, the third configuration information comprises a second moment for performing the mobility handover, and a time difference between the first moment and the second moment is less than or equal to a first time threshold; or
the first configuration information comprises a first time window for performing the first handover, the third configuration information comprises a second time window for performing the mobility handover, and a time length of an overlapping area between the first time window and the second time window is less than or equal to a second time threshold, or a time difference between a start moment of the first time window and a start moment of the second time window is less than or equal to a third time threshold.

15. The apparatus according to any one of claims 11 to 14, wherein the second configuration information is carried in at least one of the following messages: radio resource control RRC signaling, media access control control element MAC CE signaling, downlink control information DCI, and a multicast message; or the second configuration information is carried in at least one of the following messages: a physical uplink shared channel PUSCH and a physical uplink control channel PUCCH.

16. The apparatus according to any one of claims 11 to 15, wherein a length of the second configuration information is 1 bit.

17. The apparatus according to any one of claims 11 to 16, wherein the apparatus further comprises a sending module, and the sending module is configured to send the first configuration information; and
the obtaining module is specifically configured to receive the second configuration information.

18. The apparatus according to any one of claims 11 to 16, wherein the apparatus further comprises a sending module, and the sending module is configured to send the first configuration information; and
the sending module is further configured to send the second configuration information.

19. The apparatus according to any one of claims 11 to 16, wherein the obtaining module is specifically configured to receive the first configuration information; and
the apparatus further comprises a sending module, and the sending module is configured to send the second configuration information.

20. The apparatus according to any one of claims 11 to 16, wherein the obtaining module is specifically configured to receive the first configuration information; and
the obtaining module is specifically configured to receive the second configuration information.

21. A communication apparatus, comprising a processor, wherein the processor is coupled to a memory, the memory is configured to store a computer program, and when the processor invokes the computer program, the apparatus is enabled to perform the method according to any one of claims 1 to 10.

22. A communication system, comprising a communication device configured to perform the method according to any one of claims 1 to 10.

23. A computer program product, comprising computer program code, wherein when the computer program code is run on a computer, the computer is enabled to perform the method according to any one of claims 1 to 10.

24. A computer-readable medium, wherein the computer-readable medium stores program code to be executed by a computer, and the program code comprises instructions used to performing the method according to any one of claims 1 to 10.

First satellite

Second satellite

Cell A
F1, PCI=1

Cell B
F1, PCI=1

FIG. 1

FIG. 2a

FIG. 2b

Air interface

NG

NG

Terminal device

Satellite

Ground station

Core network

Data Network

Xn interface

Air interface

Terminal device

Satellite

FIG. 2c

EP 4 727 210 A1

Obtain first configuration information, where the first configuration information indicates a terminal device to perform a first handover, and the first handover is used to avoid a PCI collision — S310

Obtain second configuration information, where the second configuration information indicates the terminal device to cancel execution of the first handover — S320

FIG. 3

| Network device | | Terminal device |

S410: Determine a PCI collision cell

S420: Send first configuration information, where the first configuration information indicates the terminal device to perform a first handover, and the first handover is used to avoid a PCI collision

S430: Send third configuration information, where the third configuration information indicates the terminal device to perform a mobility handover

S440: Determine whether the terminal device cancels execution of the first handover

S450: Send second configuration information, where the second configuration information indicates the terminal device to cancel execution of the first handover

FIG. 4

Third moving cell
F1, PCI=2

First moving cell
F1, PCI=1

UE2

UE1

Second moving cell
F1, PCI=1

FIG. 5

Network device

Terminal device

S610: Receive first configuration information, where the
first configuration information indicates the terminal
device to perform a first handover, and the first handover
is used to avoid a PCI collision

S620: Receive third configuration information, where the
third configuration information indicates the terminal
device to perform a mobility handover

S630: Determine whether the terminal
device cancels execution of the first
handover

S640: Send second configuration information, where the
second configuration information indicates that the terminal
device cancels execution of the first handover

S650: Perform a handover

FIG. 6

Apparatus 700

Obtaining module 710

Sending module 720

Processing module 730

FIG. 7

Apparatus 800

Memory 810

Processor 820

Communication interface 830

Bus 840

FIG. 8

## INTERNATIONAL SEARCH REPORT

| International application No. |
| --- |
| **PCT/CN2024/095327** |

**A. CLASSIFICATION OF SUBJECT MATTER**

H04W36/00(2009.01)i

According to International Patent Classification (IPC) or to both national classification and IPC

**B. FIELDS SEARCHED**

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNTXT: CNKI; VEN; ENTXT; ENTXTC; 3GPP: 物理小区标识, 碰撞, 冲突, 混淆, 切换, 迁移, 条件切换, 取消, 撤销, 撤回, 地面移动小区, 低轨道, 非地面通信, PCI, collide, collision, conflict, confuse, handover, switch, CHO, cancel, earth-moving, LEO, NTN

**C. DOCUMENTS CONSIDERED TO BE RELEVANT**

| Category* | Citation of document, with indication, where appropriate, of the relevant passages | Relevant to claim No. |
| --- | --- | --- |
| A | CN 104053190 A (POTEVIO INSTITUTE OF TECHNOLOGY CO., LTD.) 17 September 2014 (2014-09-17) description, paragraphs [0002]-[0037], and figure 1 | 1-24 |
| A | CN 112534872 A (APPLE INC.) 19 March 2021 (2021-03-19) entire document | 1-24 |
| A | MEDIATEK INC. "Handover Enhancement in LEO NTN with Earth-moving Cells" *3GPP TSG-RAN WG2 Meeting #120, R2-2211372*, 03 November 2022 (2022-11-03), entire document | 1-24 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 August 2024** | **19 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/095327** |

| Patent document cited in search report | | | Publication date (day/month/year) | Patent family member(s) | Publication date (day/month/year) |
| --- | --- | --- | --- | --- | --- |
| CN | 104053190 | A | 17 September 2014 | None | |
| CN | 112534872 | A | 19 March 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310724404